# EUROPEAN PATENT APPLICATION

(11) **EP 4 496 104 A1**
(43) Date of publication of application: **22.01.2025**
(21) Application number: 22931330.9
(22) Date of filing: 15.03.2022
(51) Int. Cl.: H01M 50/477, H01M 4/13, H01M 10/058, H01M 10/0525

(54) **ELECTROCHEMICAL DEVICE AND ELECTRONIC DEVICE**

(71) Applicant: Ningde Amperex Technology Limited, Zhangwan Town, Jiaocheng District Ningde City Fujian 352100 (CN)
(72) Inventor: HU, Kewen, Ningde, Fujian 352100 (CN); CHEN, Jun, Ningde, Fujian 352100 (CN)
(74) Representative: Icosa
(86) International application number: PCT/CN2022/080958
(87) International publication number: WO 2023/173291

(57) **Abstract**

This application provides an electrochemical apparatus including an electrode assembly. The electrode assembly includes a positive electrode, a negative electrode, and a separator, with the separator being disposed between adjacent positive and negative electrodes. The negative electrode includes a negative electrode current collector and a negative electrode active substance layer. The negative electrode is provided with a negative electrode tab groove exposing the negative electrode current collector, and the negative electrode tab is fixed in the negative electrode tab groove and electrically connected to the negative electrode current collector. A surface of the negative electrode tab is provided with a perforated adhesive tape, the perforated adhesive tape is provided with holes along its edges in length direction, and the holes of the perforated adhesive tape are located in the perforated adhesive tape covering portions of the negative electrode active substance layer on two sides of the negative electrode tab groove. The problem of lithium precipitation in the electrochemical apparatus can be alleviated with the manner provided in this application of affixing the perforated adhesive tape in the electrochemical apparatus.

## Description

### TECHNICAL FIELD

This application relates to the field of electrochemical technologies and mainly to an electrochemical apparatus and an electronic apparatus.

### BACKGROUND

Lithium-ion batteries have been widely used in the fields such as electrical energy storage, portable electronic devices, and electric vehicles, due to their characteristics such as high specific energy, high working voltage, low self-discharge rate, a small size, and a light weight. With the expanding application scope of the lithium-ion batteries, the market imposes higher requirements on the lithium-ion batteries, for example, requiring lithium-ion batteries to have a higher charging speed and a longer service life.

During cycling of the lithium-ion battery, lithium ions are prone to accumulating at the edge of the adhesive tape at the negative electrode tab, resulting in lithium precipitation and leading to the deterioration of the negative electrode interface. This causes a rapid decline in cycling performance and accelerated volume swelling of the lithium-ion battery. Lithium precipitation not only reduces performance of lithium-ion batteries and greatly shortens their cycle life, but also limits a fast charging capacity of the lithium-ion batteries, and may cause combustion, explosion, and other consequences. In view of this, there is an urgent need to solve the problem of lithium precipitation during the cycling of the lithium-ion battery.

### SUMMARY

This application is intended to provide an electrochemical apparatus and an electronic apparatus, so as to alleviate the problem of lithium precipitation in electrochemical apparatuses. Specific technical solutions are as follows:

A first aspect of this application provides an electrochemical apparatus including an electrode assembly. The electrode assembly includes a positive electrode, a negative electrode, and a separator, with the separator being disposed between adjacent positive and negative electrodes. The negative electrode includes a negative electrode current collector and a negative electrode active substance layer disposed on at least one surface of the negative electrode current collector. The negative electrode is provided with a negative electrode tab groove exposing the negative electrode current collector, and the negative electrode tab is fixed in the negative electrode tab groove and electrically connected to the negative electrode current collector. A surface of the negative electrode tab is provided with a perforated adhesive tape, the perforated adhesive tape is provided with holes along its edges in length direction, and the holes of the perforated adhesive tape are located in the perforated adhesive tape covering portions of the negative electrode active substance layer on two sides of the negative electrode tab groove.

The inventors of this application have found through in-depth research that affixing a perforated adhesive tape at the negative electrode tab groove and ensuring that the holes of the perforated adhesive tape are located on top of portions of the negative electrode active substance layer on two sides of the negative electrode tab groove can avoid burrs around the negative electrode tab affecting the safety performance of the electrochemical apparatus, and that the perforated adhesive tape is perforated along the edges in the length direction, enabling lithium ions to be transported between the positive electrode and the negative electrode through the holes of the perforated adhesive tape. This reduces the accumulation of lithium ions at the edge of the perforated adhesive tape, thereby dispersing lithium ions around the perforated adhesive tape, reducing lithium precipitation at the place of the negative electrode tab groove, and further alleviating the problem of lithium precipitation in the electrochemical apparatus.

In an embodiment of this application, the positive electrode includes a first surface and a second surface opposite each other, and the first surface is close to the negative electrode; and the perforated adhesive tape is further affixed to a position on the first surface corresponding to the negative electrode tab groove. The inventors of this application have found through in-depth research that affixing the perforated adhesive tape to the first surface of the positive electrode can disperse lithium ions around the perforated adhesive tape, alleviating the problem of lithium precipitation in the electrochemical apparatus.

In an embodiment of this application, the perforated adhesive tape is further affixed to a position on the second surface corresponding to the negative electrode tab groove. The inventors of this application have found through in-depth research that affixing the perforated adhesive tape to the foregoing positions can alleviate the problem of lithium precipitation in the electrochemical apparatus.

In an embodiment of this application, the perforated adhesive tape goes around the edge of an end portion of the positive electrode and is further affixed to a position on the second surface corresponding to the negative electrode tab groove. The inventors of this application have found through in-depth research that affixing the perforated adhesive tape to the foregoing positions can reduce lithium precipitation at an end portion of the negative electrode, further alleviating the problem of lithium precipitation in the electrochemical apparatus.

In an embodiment of this application, a first perforated region, a second perforated region, and a non-perforated region are provided in a width direction of the perforated adhesive tape. The non-perforated region is located between the first perforated region and the second perforated region. Width w₁ of the perforated adhesive tape is 6 mm to 30 mm. The width of the first perforated region is denoted as w₂, the width of the second perforated region is denoted as w₃, and w₂ and w₃ are each independently selected from 1 mm to 10 mm. Width w₄ of the non-perforated region is 2 mm to 10 mm, and a width ratio of the width of the first perforated region or the second perforated region to the width of the non-perforated region is 0.5:1 to 1:1. The inventors of this application have found through in-depth research that controlling the width of the perforated adhesive tape to meet the foregoing requirements in combination with controlling the widths of the first perforated region, second perforated region, and non-perforated region within the foregoing ranges can further alleviate the problem of lithium precipitation in the electrochemical apparatus.

In an embodiment of this application, the holes of the perforated adhesive tape satisfy at least one of the following characteristics: (1) the spacing b between the holes is 0 mm to 2 mm, and the minimum diameter c of the circumscribed circle of the contour of the hole is 0.1 mm to 3 mm; (2) a sum of areas of the holes in the first perforated region accounts for 20% to 80% of the area of the first perforated region, and a sum of areas of the holes in the second perforated region accounts for 20% to 80% of the area of the second perforated region; or (3) the shape of the holes is at least one of a circle, an ellipse, or a polygon. The inventors of this application have found through research that controlling the holes of the perforated adhesive tape to satisfy one, two, or a combination of more than two of the foregoing characteristics can alleviate the problem of lithium precipitation in the electrochemical apparatus.

In an embodiment of this application, the perforated adhesive tape includes an adhesive layer and a substrate layer, the adhesive layer including polyolefin and/or modified polyolefin, elastomer, filler, and antioxidant, where based on total mass of the adhesive layer, a mass percentage of the polyolefin and/or modified polyolefin is 45% to 85%, a mass percentage of the elastomer is 10% to 35%, a mass percentage of the filler is 2% to 10%, and a mass percentage of the antioxidant is 2% to 10%. The inventors of this application have found through research that synergistically controlling the mass percentages of the components in the adhesive layer within the foregoing ranges is conducive to improving the electrolyte resistance and adhesion strength of the perforated adhesive tape, reducing the swelling degree of the perforated adhesive tape, thereby enhancing the safety performance of the electrochemical apparatus, extending the service life of the electrochemical apparatus, and controlling costs.

In an embodiment of this application, the adhesive layer satisfies at least one of the following characteristics: (1) the polyolefin includes polyethylene and/or polypropylene, the modified polyolefin includes maleic anhydride modified polyethylene and/or maleic anhydride modified polypropylene, and the weight-average molecular weights of the polyolefin and the modified polyolefin are each independently selected from 30,000 to 200,000; (2) the elastomer includes at least one of styrene-ethylene-butylene-styrene block copolymer, polyurethane, polyamide, polybutadiene, or polyisobutylene; (3) the filler includes at least one of titanium dioxide, talcum powder, white carbon black, or calcium carbonate; or (4) the antioxidant includes at least one of diphenylamine, trimethyl phosphite, triethyl phosphite, or dioctadecyl thiodipropionate. The inventors of this application have found through research that controlling the adhesive layer of the perforated adhesive tape to satisfy one, two, or a combination of more than two of the foregoing conditions can further alleviate the problem of lithium precipitation in the electrochemical apparatus and enhance the safety performance of the electrochemical apparatus.

In an embodiment of this application, the substrate layer includes at least one of polyethylene terephthalate, polyimide, or polypropylene. The inventors of this application have found through research that with the foregoing materials being selected as the substrate layer, it is conducive to improving the electrolyte resistance of the perforated adhesive tape, thereby alleviating the problem of lithium precipitation in the electrochemical apparatus and enhancing the safety performance of the electrochemical apparatus.

In an embodiment of this application, the thickness of the adhesive layer is 4 µm to 20 µm, and the thickness of the substrate layer is 4 µm to 30 µm. The inventors of this application have found through research that controlling the thicknesses of the adhesive layer and substrate layer of the perforated adhesive tape within the foregoing ranges enables to maintain the energy density of the electrochemical apparatus while improving the safety performance of the electrochemical apparatus.

In an embodiment of this application, an adhesion strength of the perforated adhesive tape soaked in an electrolyte at 85°C for 4 hours is 0.2 N/mm to 0.5 N/mm. The inventors of this application have found through research that the adhesion strength of the perforated adhesive tape within the above range is conducive to alleviating the problem of lithium precipitation in the electrochemical apparatus and enhancing the safety performance of the electrochemical apparatus.

In an embodiment of this application, thickness A of the perforated adhesive tape soaked in the electrolyte at 85°C for 24 hours and thickness B of the perforated adhesive tape without soaking in the electrolyte satisfy: 0 µm < A-B ≤ 2 µm, that is, the perforated adhesive tape provided by this application has a low swelling degree. This is conducive to enhancing the safety performance of the electrochemical apparatus and alleviating the problem of lithium precipitation in the electrochemical apparatus.

In an embodiment of this application, the maximum single-sided adhesive overflow width of the perforated adhesive tape is 0 mm to 1 mm, that is, the perforated adhesive tape provided by this application has good thermal stability. This is conducive to enhancing the safety performance of the electrochemical apparatus.

This application provides an electrochemical apparatus and an electronic apparatus. The electrochemical apparatus includes an electrode assembly. The electrode assembly includes a positive electrode, a negative electrode, and a separator. The negative electrode includes a negative electrode current collector and a negative electrode active substance layer disposed on at least one surface of the negative electrode current collector. The negative electrode is provided with a negative electrode tab groove exposing the negative electrode current collector, and the negative electrode tab is fixed in the negative electrode tab groove and electrically connected to the negative electrode current collector. A surface of the negative electrode tab is provided with a perforated adhesive tape, the perforated adhesive tape is provided with holes along its edges in length direction, and the holes of the perforated adhesive tape are located in the perforated adhesive tape covering portions of the negative electrode active substance layer on two sides of the negative electrode tab groove. Affixing the foregoing perforated adhesive tape in the electrochemical apparatus enables to effectively reduce the degree of lithium precipitation in the electrochemical apparatus. The electronic apparatus of this application includes the electrochemical apparatus of this application, therefore, the electronic apparatus of this application also has good safety performance.

Certainly, implementing any embodiment of this application does not necessarily require all the advantages described above.

### BRIEF DESCRIPTION OF DRAWINGS

To describe technical solutions in some embodiments of this application more clearly, the following briefly describes accompanying drawings required in these embodiments. Apparently, the accompanying drawings in the following descriptions show merely some embodiments in this application, and persons of ordinary skill in the art may derive other drawings from these accompanying drawings.
FIG. 1 is a schematic cross-sectional structural diagram of an electrode assembly in thickness direction according to some embodiments of this application;
FIG. 2 is a locally enlarged view of position A in FIG. 1;
FIG. 3 is a schematic structural diagram of a negative electrode affixed with a perforated adhesive tape according to some other embodiments of this application;
FIG. 4 is a schematic structural diagram of a perforated adhesive tape according to some other embodiments of this application;
FIG. 5 is a schematic cross-sectional structural diagram of an electrode assembly in thickness direction according to some embodiments of this application;
FIG. 6 is a locally enlarged view of position B in FIG. 5;
FIG. 7 is a partial schematic cross-sectional structural diagram of an electrochemical apparatus in thickness direction according to some embodiments of this application;
FIG. 8 is a locally enlarged view of position C in FIG. 7;
FIG. 9 is a partial schematic cross-sectional structural diagram of an electrochemical apparatus in length direction according to some embodiments of this application; and
FIG. 10 is a partial schematic cross-sectional structural diagram of an electrochemical apparatus in length direction according to some other embodiments of this application.

Reference numerals: 10. negative electrode; 11. negative electrode tab; 12. negative electrode current collector; 13. negative electrode active substance layer; 14. negative electrode tab groove; 20. separator; 30. positive electrode; 31. positive electrode tab; 32. positive electrode current collector; 33. positive electrode active substance layer; 40. perforated adhesive tape; 41. hole; 42. first perforated region; 43. second perforated region; 44. non-perforated region; and 50. green adhesive.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on these embodiments of this application falls within the protection scope of this application.

It should be noted that, in the specific embodiments of this application, a lithium-ion battery is used as an example of an electrochemical apparatus to explain this application. However, the electrochemical apparatus in this application is not limited to the lithium-ion battery.

During cycling of the lithium-ion battery in the prior art, lithium ions could accumulate at the edge of the adhesive tape at the negative electrode tab during transport, causing lithium precipitation. To solve the foregoing technical problem, this application provides an electrochemical apparatus and an electronic apparatus.

A first aspect of this application provides an electrochemical apparatus including an electrode assembly. The electrode assembly includes a positive electrode, a negative electrode, and a separator, with the separator being disposed between adjacent positive and negative electrodes. The negative electrode includes a negative electrode current collector and a negative electrode active substance layer disposed on at least one surface of the negative electrode current collector. The negative electrode is provided with a negative electrode tab groove exposing the negative electrode current collector, and the negative electrode tab is fixed in the negative electrode tab groove and electrically connected to the negative electrode current collector. A surface of the negative electrode tab is provided with a perforated adhesive tape, the perforated adhesive tape is provided with holes along its edges in length direction, and the holes of the perforated adhesive tape are located in the perforated adhesive tape covering portions of the negative electrode active substance layer on two sides of the negative electrode tab groove.

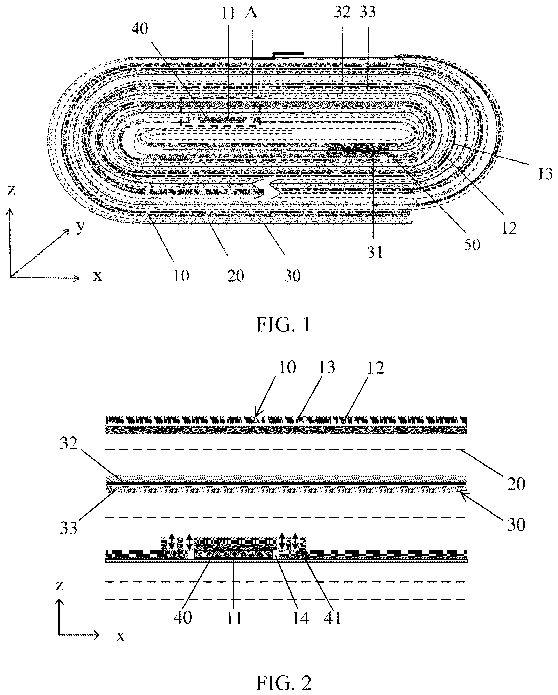

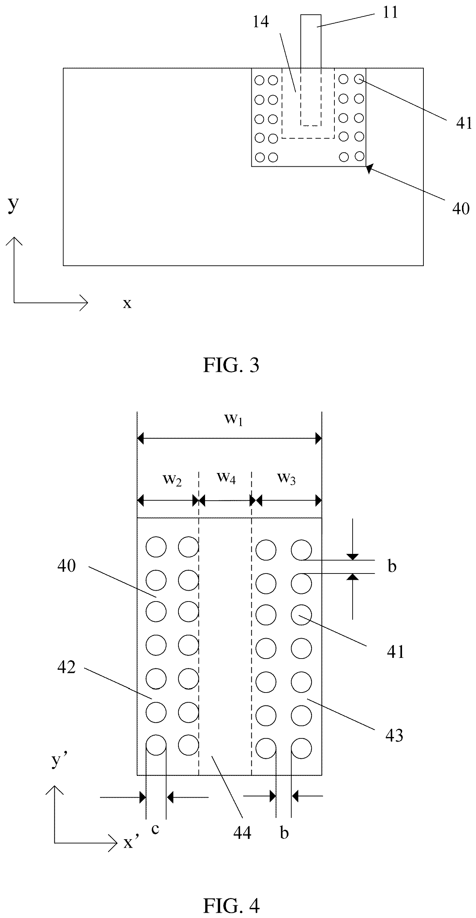

For example, as shown in FIG. 1 to FIG. 3, for ease of description, a three-dimensional rectangular coordinate system is established with the width direction of the electrode assembly as direction x, the length direction of the electrode assembly as direction y, and the thickness direction of the electrode assembly as direction z. The electrode assembly includes a negative electrode 10, a positive electrode 30, a separator 20 located between the positive electrode 30 and the negative electrode 10, a perforated adhesive tape 40, and a green adhesive 50. The positive electrode 30 includes a positive electrode tab 31, a positive electrode current collector 32, and a positive electrode active substance layer 33. The negative electrode 10 includes a negative electrode tab 11, a negative electrode current collector 12, a negative electrode active substance layer 13, and a negative electrode tab groove 14. In the width direction (direction x) of the electrode assembly, the perforated adhesive tape 40 is affixed to a region in which the negative electrode tab 11 is connected to the negative electrode 10, and covers the negative electrode tab groove 14. It can be understood that an area of the perforated adhesive tape 40 is larger than an area of the negative electrode tab groove 14, and holes 41 of the perforated adhesive tape 40 are located on the perforated adhesive tape 40 covering portions of the negative electrode active substance layer 13 on two sides of the negative electrode tab groove 14. The portions of the negative electrode active substance layer 13 on two sides of the negative electrode tab groove 14 refer to partial surfaces of the negative electrode active substance layer 13 on two sides of the negative electrode tab groove 14, that is, in the thickness direction (direction z) of the electrode assembly, an orthographic projection of the holes 41 of the perforated adhesive tape 40 on the negative electrode 10 does not overlap at all with an orthographic projection of the negative electrode tab groove 14 on the negative electrode 10, as shown in FIG. 3.

For example, as shown in FIG. 4, for ease of description, a plane rectangular coordinate system is established with the length direction of the perforated adhesive tape as direction y' and the width direction of the perforated adhesive tape as direction x'. Holes 41 penetrating through the perforated adhesive tape 40 are provided along edges of the perforated adhesive tape 40 in the length direction (direction y'). The edges of the perforated adhesive tape 40 in the length direction (direction y') refer to the two opposite edges in the width direction (direction x') of the perforated adhesive tape. It can be understood that the holes of the perforated adhesive tape can be arranged uniformly or non-uniformly, provided that the objectives of this application can be achieved.

The inventors of this application have found through in-depth research that affixing a perforated adhesive tape at the negative electrode tab groove and ensuring that the holes of the perforated adhesive tape are located on top of the portions on two sides of the negative electrode tab groove can avoid burrs around the negative electrode tab affecting the safety performance of the electrochemical apparatus, and provision of the holes penetrating through the perforated adhesive tape along the edges of the adhesive tape in the length direction enables lithium ions to be transported between the positive electrode and the negative electrode through the holes of the perforated adhesive tape (as shown by the arrow in FIG. 2, the transport direction of lithium ions). This reduces the accumulation of lithium ions at the edge of the perforated adhesive tape, thereby dispersing lithium ions around the perforated adhesive tape, reducing lithium precipitation at the place of the negative electrode tab groove, and further alleviating the problem of lithium precipitation in the electrochemical apparatus.

In this application, the positive electrode tab is a metal conductor led out of the positive electrode, and the negative electrode tab is a metal conductor led out of the negative electrode. The positive electrode tab and the negative electrode tab are used to connect other parts of the electrochemical apparatus in series or in parallel. The material for the positive electrode tab and the negative electrode tab is not particularly limited in this application, provided that the objectives of this application can be achieved. For example, materials known in the art for the positive electrode tab and the negative electrode tab can be used. The method for forming the negative electrode tab groove is not particularly limited in this application. Any method for forming known in the art can be used, provided that the objectives of this application can be achieved. For example, the negative electrode tab groove can be formed by laser cleaning in a corresponding negative electrode region, or by first affixing a foamed adhesive tape to a negative electrode current collector, coating and drying a negative electrode active substance layer, and then peeling off the foamed adhesive tape.

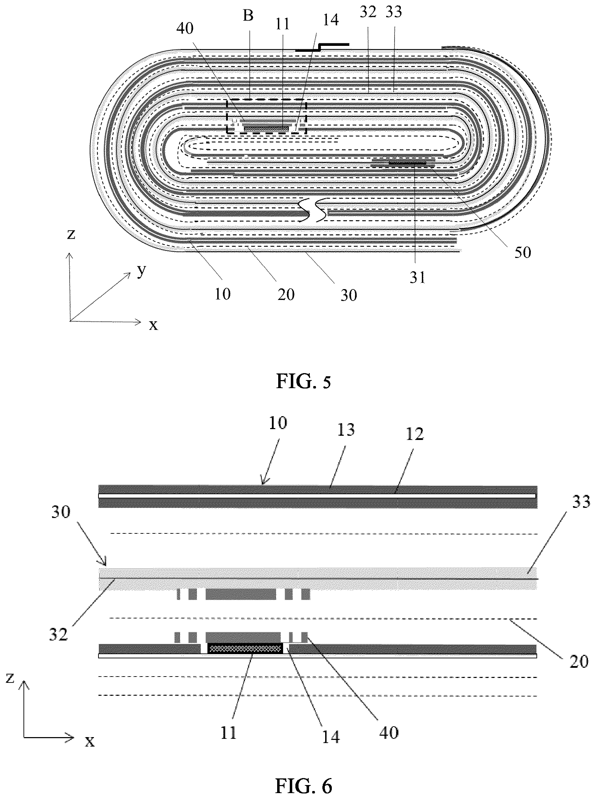

In an embodiment of this application, the positive electrode includes a first surface and a second surface opposite each other, and the first surface is close to the negative electrode; and the perforated adhesive tape is further affixed to a position on the first surface corresponding to the negative electrode tab groove. For example, as shown in FIG. 5 and FIG. 6, the perforated adhesive tape 40 is affixed to the surface of the negative electrode tab groove 14 and a surface of the positive electrode active substance layer 33 on the first surface of the positive electrode 30, respectively, with affixing positions opposite the position of the negative electrode tab groove 14. The inventors of this application have found through in-depth research that compared with using non-perforated adhesive tape affixed to a corresponding position in the prior art, affixing the perforated adhesive tape to the first surface of the positive electrode can disperse lithium ions around the perforated adhesive tape, further alleviating the problem of lithium precipitation in the electrochemical apparatus. In this application, the first surface and the second surface of the positive electrode are two opposite surfaces in the thickness direction of the positive electrode, where the thickness direction of the positive electrode is the same as the thickness direction (direction z) of the electrode assembly.

In addition, during the use of the electrochemical apparatus, lithium ions are transported from an end portion of the positive electrode to the adjacent negative electrode, causing lithium precipitation at an end portion of the negative electrode. The end portion of the positive electrode refers to, in a direction in which the negative electrode tab extends, a side of the positive electrode in its own length direction and close to the negative electrode tab; and the end portion of the negative electrode refers to, in a direction in which the negative electrode tab extends, a side of the negative electrode in its own length direction and close to the negative electrode tab. The length direction of the positive electrode and the length direction of the negative electrode are the same as the width direction (direction x) of the electrode assembly.

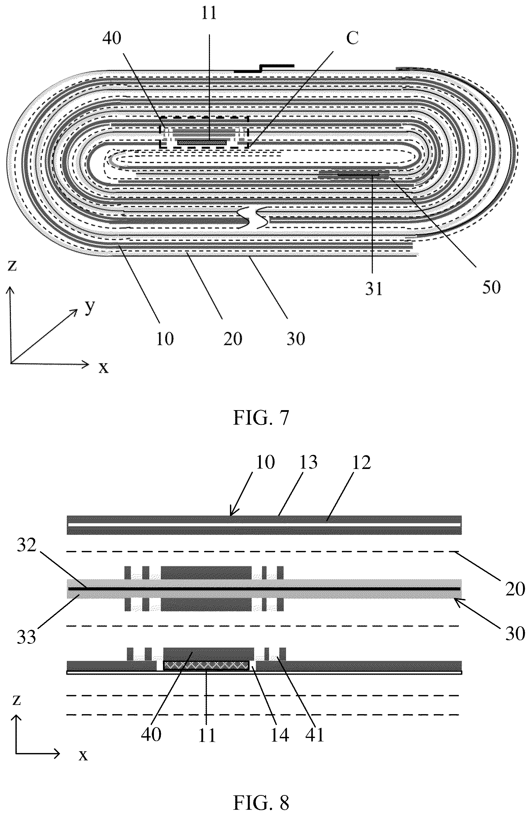

In an embodiment of this application, the perforated adhesive tape may also be affixed to a position on the second surface corresponding to the negative electrode tab groove. For example, as shown in FIG. 7 to FIG. 9, the perforated adhesive tape 40 is affixed to the surface of the negative electrode tab groove 14, and the perforated adhesive tape 40 is also affixed to positions on the first surface and second surface of the positive electrode 30 corresponding to the negative electrode tab groove 14, respectively. The inventors of this application have found through research that affixing the perforated adhesive tape to the positions on the first surface and second surface corresponding to the negative electrode tab groove can alleviate the problem of lithium precipitation caused by impeded lithium ion transport and the problem of diffusing lithium ions from the end portion of the positive electrode to the adjacent end portion of the negative electrode, thereby reducing lithium precipitation at the end portion of the negative electrode and further alleviating the problem of lithium precipitation in the electrochemical apparatus.

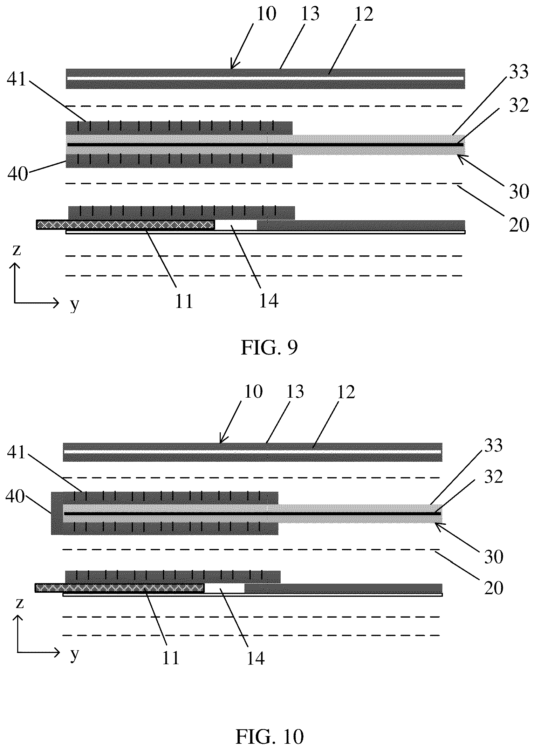

In an embodiment of this application, the perforated adhesive tape goes around the edge of an end portion of the positive electrode and is further affixed to a position on the second surface corresponding to the negative electrode tab groove. For example, as shown in FIG. 10, the perforated adhesive tape 40 is affixed to the surface of the negative electrode tab groove 14, and the perforated adhesive tape 40 is also affixed to positions on the first surface and second surface of the positive electrode 30 corresponding to the negative electrode tab groove 14, respectively. The perforated adhesive tape 40 goes around the end portion of the positive electrode 30 to wrap the end portion of the positive electrode 30. The inventors of this application have found through in-depth research that affixing the perforated adhesive tape to the end portion of the positive electrode by wrapping can better alleviate the problem of diffusing lithium ions from the end portion of the positive electrode to the adjacent end portion of the negative electrode, thereby reducing lithium precipitation at the end portion of the negative electrode and further alleviating the problem of lithium precipitation in the electrochemical apparatus.

In an embodiment of this application, for example, as shown in FIG. 4, a first perforated region 42, a second perforated region 43, and a non-perforated region 44 are provided in the width direction (direction x') of the perforated adhesive tape 40, and the non-perforated region 44 is located between the first perforated region 42 and the second perforated region 43. The width w₁ of the perforated adhesive tape 40 is 6 mm to 30 mm. For example, w₁ may be 6 mm, 12 mm, 18 mm, 24 mm, 30 mm, or any range therebetween. The width of the first perforated region 42 is denoted as w₂, the width of the second perforated region 43 is denoted as w₃, and w₂ and w₃ are each independently selected from 1 mm to 10 mm. For example, w₂ may be 1 mm, 2.5 mm, 5 mm, 7.5 mm, 10 mm, or any range therebetween, and w₃ may be 1 mm, 2.5 mm, 5 mm, 7.5 mm, 10 mm, or any range therebetween. The width w₄ of the non-perforated region 44 is 2 mm to 10 mm. For example, w₄ may be 2 mm, 4 mm, 6 mm, 8 mm, 10 mm, or any range therebetween. A width ratio of the width of the first perforated region 42 or the width of the second perforated region 43 to the width of the non-perforated region 44 is 0.5:1 to 1:1. For example, w₂:w₄ may be 0.5:1, 0.6:1, 0.7:1, 0.8:1, 0.9:1, 1:1, or any range therebetween, and w₃:w₄ may be 0.5:1, 0.6:1, 0.7:1, 0.8:1, 0.9:1, 1:1, or any range therebetween.

The inventors of this application have found through in-depth research that controlling the width of the perforated adhesive tape in combination with controlling the widths of the first perforated region, second perforated region, and non-perforated region within the foregoing ranges can better disperse lithium ions to reduce the accumulation of lithium ions around the perforated adhesive tape, thereby further alleviating the problem of lithium precipitation in the electrochemical apparatus. In this application, the widths of the first perforated region and the second perforated region may be equal or unequal.

In an embodiment of this application, the holes of the perforated adhesive tape satisfy at least one of the following characteristics.
(1) A spacing b between the holes is 0 mm to 2 mm, and a minimum diameter c of a circumscribed circle of the contour of the hole is 0.1 mm to 3 mm. As shown in FIG. 4, the spacing between the holes 41 refers to a minimum straight-line distance between the contours of two adjacent holes 41. For example, b may be 0 mm, 0.1 mm, 0.5 mm, 1 mm, 1.5 mm, 2 mm, or any range therebetween, and c may be 0.1 mm, 0.5 mm, 1 mm, 1.5 mm, 2 mm, 2.5 mm, 3 mm, or any range therebetween. The inventors of this application have found through research that with the hole spacing and the diameter of the holes satisfying the foregoing ranges, the holes in the perforated adhesive tape can be more evenly distributed, allowing lithium ions to be better transported between the positive electrode and the negative electrode, thereby alleviating the problem of lithium precipitation in the electrochemical apparatus.
(2) A sum of areas of the holes in the first perforated region accounts for 20% to 80% of the area of the first perforated region, preferably 30% to 70%, and a sum of areas of the holes in the second perforated region accounts for 20% to 80% of the area of the second perforated region, preferably 30% to 70%. For example, the sum of areas of the holes in the first perforated region may account for 20%, 30%, 40%, 50%, 60%, 70%, 80% of the area of the first perforated region, or any range therebetween, and the sum of areas of the holes in the second perforated region may account for 20%, 30%, 40%, 50%, 60%, 70%, 80% of the area of the second perforated region, or any range therebetween.
   The inventors of this application have found through research that when a ratio of the sum of areas of the holes in the first perforated region to the area of the first perforated region or a ratio of the sum of areas of the holes in the second perforated region to the area of the second perforated region is too small (for example, less than 20%), lithium ions cannot be effectively dispersed through the holes of the perforated adhesive tape, and are prone to accumulating around the perforated adhesive tape, so that the problem of lithium precipitation in the electrochemical apparatus is not significantly alleviated; and when the ratio of the sum of the areas of the holes in the first perforated region to the area of the first perforated region or the ratio of the sum of the areas of the holes in the second perforated region to the area of the second perforated region is too large (for example, greater than 80%), the perforated adhesive tape has a decreased adhesion strength and cannot effectively bind the negative electrode tab, affecting the safety performance of the electrochemical apparatus. Therefore, controlling the area of the holes in the first perforated region and the second perforated region within the foregoing ranges can alleviate the problem of lithium precipitation in the electrochemical apparatus and enable the electrochemical apparatus to have good safety performance.
(3) The shape of the holes is at least one of a circle, an ellipse, or a polygon, where the polygon can include but is not limited to triangle, quadrilateral, and pentagon. The hole shapes are more conducive to the preparation of the perforated adhesive tape. The inventors of this application have found through research that controlling the holes of the perforated adhesive tape to satisfy one, two, or a combination of more than two of the foregoing characteristics can alleviate the problem of lithium precipitation in the electrochemical apparatus.

In an embodiment of this application, the perforated adhesive tape includes an adhesive layer and a substrate layer, the adhesive layer including polyolefin and/or modified polyolefin, elastomer, filler, and antioxidant. Based on a total mass of the adhesive layer, a mass percentage of the polyolefin and/or modified polyolefin is 45% to 85%. For example, the mass percentage of the polyolefin and/or modified polyolefin may be 45%, 50%, 60%, 70%, 80%, 85%, or any range therebetween. When only polyolefin is included and no modified polyolefin is included, the mass percentage of polyolefin and/or modified polyolefin refers to the mass percentage of polyolefin; when only modified polyolefin is included and no polyolefin is included, the mass percentage of polyolefin and/or modified polyolefin refers to the mass percentage of modified polyolefin; and when both polyolefin and modified polyolefin are included, the mass percentage of polyolefin and/or modified polyolefin refers to a sum of the mass percentages of polyolefin and modified polyolefin. A mass percentage of the elastomer is 10% to 35%. For example, the mass percentage of the elastomer may be 10%, 15%, 20%, 25%, 30%, 35%, or any range therebetween. A mass percentage of the filler is 2% to 10%. For example, the mass percentage of the filler may be 2%, 4%, 6%, 8%, 10%, or any range therebetween. A mass percentage of the antioxidant is 2% to 10%. For example, the mass percentage of the antioxidant may be 2%, 4%, 6%, 8%, 10%, or any range therebetween.

The inventors of this application have found through research that a too-low mass percentage (for example, less than 45%) of polyolefin and/or modified polyolefin affects the electrolyte resistance, adhesion strength, and swelling degree performance of the perforated adhesive tape; and a too-high mass percentage (for example, greater than 85%) of polyolefin and/or modified polyolefin causes the adhesive layer to become less flexible and results in the waste of polyolefin and/or modified polyolefin, leading to an increase in the cost of the electrochemical apparatus. Controlling the mass percentage of polyolefin and/or modified polyolefin within the foregoing ranges is conducive to improving the electrolyte resistance and adhesion strength of the perforated adhesive tape, reducing the swelling degree of the perforated adhesive tape, so that the perforated adhesive tape can effectively bind the negative electrode tab, thereby enhancing the safety performance of the electrochemical apparatus, extending the service life of the electrochemical apparatus, and controlling costs. In addition, further synergistically controlling the mass percentages of the components in the adhesive layer within the foregoing ranges is conducive to improving the electrolyte resistance and adhesion strength of the perforated adhesive tape, reducing the swelling degree of the perforated adhesive tape, thereby enhancing the safety performance of the electrochemical apparatus, and extending the life of the electrochemical apparatus.

In an embodiment of this application, the adhesive layer satisfies at least one of the following characteristics.
(1) The polyolefin includes polyethylene and/or polypropylene, the modified polyolefin includes maleic anhydride modified polyethylene and/or maleic anhydride modified polypropylene, and weight-average molecular weights of the polyolefin and the modified polyolefin are each independently selected from 30,000 to 200,000. For example, the weight-average molecular weight of the polyolefin may be 30,000, 55,000, 100,000, 155,000, 200,000, or any range therebetween, and the weight-average molecular weight of the modified polyolefin may be 30,000, 55,000, 100,000, 155,000, 200,000, or any range therebetween. The inventors of this application have found through research that controlling the weight-average molecular weights of polyolefin and modified polyolefin within the foregoing ranges is conducive to improving the adhesion strength of the perforated adhesive tape, so that the perforated adhesive tape can effectively bind tabs. In addition, the amount of lithium ions precipitated from underneath the perforated adhesive tape soaked in the electrolyte for a long time is reduced, further improving the problem of lithium precipitation in the electrochemical apparatus and enhancing the safety performance of the electrochemical apparatus.
(2) The elastomer includes at least one of styrene-ethylene-butylene-styrene block copolymer, polyurethane, polyamide, polybutadiene, or polyisobutylene, where the elastomer refers to a polymeric material exhibiting significant deformation under low stress and capable of rapidly returning to a state and dimensions close to its original upon stress relaxation. The inventors of this application have found through research that an addition of the foregoing elastomers to the adhesive layer further improves the adhesion strength of the perforated adhesive tape. The perforated adhesive tape with a too-low adhesion strength cannot effectively bind the negative electrode tab, and lithium ions are easily precipitated from underneath the perforated adhesive tape soaked in the electrolyte for a long time, leading to lithium precipitation in the electrochemical apparatus. With the foregoing elastomers being selected, the problem of lithium precipitation in the electrochemical apparatus can be alleviated, and the safety performance of the electrochemical apparatus can be enhanced.
(3) The filler includes at least one of titanium dioxide, talcum powder, white carbon black, or calcium carbonate. The inventors of this application have found through research that with the foregoing fillers being selected, it is conducive to improving the electrolyte resistance of the perforated adhesive tape, and the precipitation of lithium ions from underneath the perforated adhesive tape can be slowed down when the perforated adhesive tape is soaked in the electrolyte for a long time, further alleviating the problem of lithium precipitation in the electrochemical apparatus and enhancing the safety performance of the electrochemical apparatus.
(4) The antioxidant includes at least one of diphenylamine, trimethyl phosphite, triethyl phosphite, or dioctadecyl thiodipropionate. The inventors of this application have found through research that with the foregoing antioxidants being selected, the electrolyte resistance of the perforated adhesive tape can be improved, and the precipitation of lithium ions from underneath the perforated adhesive tape can be slowed down when the perforated adhesive tape is soaked in the electrolyte for a long time, further alleviating the problem of lithium precipitation in the electrochemical apparatus and enhancing the safety performance of the electrochemical apparatus.

The inventors of this application have found through research that controlling the adhesive layer of the perforated adhesive tape to satisfy one, two, or a combination of more than two of the foregoing conditions can further enhance the safety performance of the electrochemical apparatus and alleviate the problem of lithium precipitation in the electrochemical apparatus.

In an embodiment of this application, the substrate layer includes at least one of polyethylene terephthalate, polyimide, or polypropylene. The inventors of this application have found through research that with the foregoing materials being selected as the substrate layer, it is conducive to improving the electrolyte resistance of the perforated adhesive tape, and the precipitation of lithium ions from underneath the perforated adhesive tape can be slowed down when the perforated adhesive tape is soaked in the electrolyte for a long time, further alleviating the problem of lithium precipitation in the electrochemical apparatus and enhancing the safety performance of the electrochemical apparatus.

In an embodiment of this application, the thickness of the adhesive layer is 4 µm to 20 µm; for example, the thickness of the adhesive layer may be 4 µm, 5 µm, 8 µm, 10 µm, 12 µm, 15 µm, 18 µm, 20 µm, or any range therebetween; and the thickness of the substrate layer is 4 µm to 30 µm; for example, the thickness of the substrate layer may be 4 µm, 5 µm, 10 µm, 12 µm, 20 µm, 25 µm, 30 µm, or any range therebetween. The inventors of this application have found through research that the adhesive layer with a too-small thickness (for example, less than 4 µm) is more prone to performance changes when soaked in the electrolyte, affecting the adhesion strength of the perforated adhesive tape, thereby affecting the safety performance of the electrochemical apparatus. Within a certain range, the adhesion strength of the adhesive tape increases with the thickness of the adhesive layer, but when the thickness of the adhesive layer is too large (for example, more than 20 µm), the adhesion strength of the adhesive layer tends to remain unchanged, but the energy density of the electrochemical apparatus is affected. When the substrate layer has a too-small thickness (for example, less than 4 µm), its supporting effect on the adhesive layer is weak, resulting in a poor fixing effect on the negative electrode tab. When the substrate layer has a too-large thickness (for example, more than 30 µm), the effect is similar to that of some embodiments within the scope of this application, but the energy density of the electrochemical apparatus is affected. Controlling the thicknesses of the adhesive layer and substrate layer of the perforated adhesive tape within the foregoing ranges enables to maintain the energy density of the electrochemical apparatus while improving the safety performance of the electrochemical apparatus.

In an embodiment of this application, an adhesion strength of the perforated adhesive tape soaked in an electrolyte at 85°C for 4 hours is 0.2 N/mm to 0.5 N/mm; that is, the perforated adhesive tape of this application has a good adhesion strength and can effectively bond tabs, facilitating enhancement of the safety performance of the electrochemical apparatus. When the adhesion strength of the perforated adhesive tape is too low (less than 0.2 N/mm), lithium ions are easily precipitated from underneath the perforated adhesive tape soaked in the electrolyte for a long time, leading to lithium precipitation in the electrochemical apparatus. Controlling the adhesion strength of the perforated adhesive tape within the foregoing ranges can alleviate the problem of lithium precipitation in the electrochemical apparatus. For example, the adhesion strength of the perforated adhesive tape soaked in an electrolyte at 85°C for 4 hours may be 0.2 N/mm, 0.3 N/mm, 0.4 N/mm, 0.5 N/mm, or any range therebetween. An adhesion strength test of the perforated adhesive tape soaked in an electrolyte at 85°C for 4 hours is performed by first hot pressing the perforated adhesive tape, then soaking the tape in the electrolyte, and finally testing its adhesion strength.

In an embodiment of this application, thickness A of the perforated adhesive tape soaked in the electrolyte at 85°C for 24 hours and thickness B of the perforated adhesive tape without soaking in the electrolyte satisfy: 0 µm < A-B ≤ 2 µm, that is, the perforated adhesive tape provided by this application has a low swelling degree. This is conducive to enhancing the safety performance of the electrochemical apparatus. When the swelling degree of the perforated adhesive tape is too high (A-B greater than 2 µm), lithium ion transport is impeded, affecting the rate performance of the electrochemical apparatus. Controlling the swelling degree of the perforated adhesive tape within the foregoing ranges can alleviate the problem of lithium precipitation in the electrochemical apparatus while maintaining its rate performance. For example, the value of A-B may be 0.01 µm, 0.5 µm, 1 µm, 1.5 µm, 2 µm, or any range therebetween.

In an embodiment of this application, the maximum single-sided adhesive overflow width of the perforated adhesive tape is 0 mm to 1 mm, that is, the perforated adhesive tape provided by this application has good thermal stability, thereby better binding the negative electrode tab and enhancing the safety performance of the electrochemical apparatus. For example, the maximum single-sided adhesive overflow width of the perforated adhesive tape may be 0 mm, 0.1 mm, 0.2 mm, 0.3 mm, 0.4 mm, 0.5 mm, 0.6 mm, 0.7 mm, 0.8 mm, 0.9 mm, 1 mm, or any range therebetween. In this application, the maximum single-sided adhesive overflow width of the perforated adhesive tape refers to half of a difference between the maximum width of the perforated adhesive tape hot pressed at a temperature of 85°C and a pressure of 1 MPa for 1 hour and the width of the perforated adhesive tape without hot pressing.

In this application, the perforated adhesive tape may further include a release paper. The release paper is provided on the surface of the adhesive layer facing away from the substrate layer. The release paper in the perforated adhesive tape is provided to prevent the surface of the adhesive layer from coming into contact with a non-target affixing surface or itself, thereby preventing the adhesive layer from affixing to non-target affixing surfaces or itself during the use of the perforated adhesive tape. Those skilled in the art can select any suitable release paper material or size according to actual needs. In some embodiments, the release paper may be provided on one side on any exposed surface of the adhesive layer, for example, but not limited to, the surface of the adhesive layer facing away from the substrate layer or the surface of the side of the adhesive layer. In some embodiments, the release paper is removed before the adhesive layer in the perforated adhesive tape is affixed to a target surface. In some embodiments, the release paper includes a single-sided silicone release film or a double-sided silicone release film.

The preparation method of the perforated adhesive tape is not particularly limited in this application, provided that the objectives of this application can be achieved. For example, the following method may be used to prepare the perforated adhesive tape in this application, including the following steps: mixing raw materials of the adhesive layer according to a certain proportion to obtain an adhesive layer slurry; then applying the adhesive layer slurry to a substrate layer, followed by drying to obtain an adhesive tape; and further perforating along the edges of the adhesive tape in length direction. The perforation method is not particularly limited in this application, provided that the objectives of this application can be achieved. For example, laser perforation or mechanical perforation may be used. The substrate layer can be treated with a non-silicone release agent before undergoing corona treatment on its surface. The drying temperature can be 60°C to 120°C.

The positive electrode in this application is not particularly limited, provided that the objectives of this application can be achieved. For example, the positive electrode usually includes a positive electrode current collector and a positive electrode active substance layer. The positive electrode current collector is not particularly limited, provided that the objectives of this application can be achieved. For example, the positive electrode current collector may include but is not limited to an aluminum foil, an aluminum alloy foil, or a composite current collector. In this application, thickness of the positive electrode current collector is not particularly limited, provided that the objectives of this application can be achieved. For example, the thickness of the positive electrode current collector is 8 µm to 12 µm. In this application, the positive electrode active substance layer may be disposed on one surface of the positive electrode current collector in thickness direction, or may be disposed on two surfaces of the positive electrode current collector in thickness direction. It should be noted that the "surface" herein may be an entire region of the positive electrode current collector, or may be a partial region of the positive electrode current collector. This is not particularly limited in this application, provided that the objectives of this application can be achieved.

In this application, the positive electrode active substance layer includes a positive electrode active material, where the positive electrode active material is not particularly limited, provided that the objectives of this application can be achieved. For example, the positive electrode active material may include at least one of composite oxides of lithium and transition metal elements. The transition metal elements are not particularly limited in this application, provided that the objectives of this application can be achieved. For example, the transition metal elements may include at least one of nickel, manganese, cobalt, or iron. Specifically, the positive electrode active material may include at least one of lithium nickel cobalt manganese oxide (811, 622, 523, 111), lithium nickel cobalt aluminate, lithium iron phosphate, lithium-rich manganese-based materials, lithium cobalt oxide, lithium manganate, lithium iron manganese phosphate, or lithium titanate.

In this application, the positive electrode active substance layer may further include a conductive agent. The conductive agent is not particularly limited in this application, provided that the objectives of this application can be achieved. For example, the conductive agent may include but is not limited to at least one of conductive carbon black (Super P), carbon nanotubes (CNTs), carbon nanofibers, flake graphite, Ketjen black, graphene, metal material, or conductive polymer. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fibers, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

In this application, the positive electrode active substance layer may further include a binder. The binder is not particularly limited in this application, provided that the objectives of this application can be achieved. For example, the binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyamideimide, styrene-butadiene rubber, or polyvinylidene fluoride.

Optionally, the positive electrode may further include a conductive layer, and the conductive layer is sandwiched between the positive electrode current collector and the positive electrode active substance layer. Composition of the conductive layer is not particularly limited in this application, and the conductive layer may be a conductive layer commonly used in the art. For example, the conductive layer may include but is not limited to the foregoing conductive agent and the foregoing binder.

In this application, the negative electrode active substance layer may be disposed on one or two surfaces of the negative electrode current collector in thickness direction of the negative electrode current collector. It should be noted that the "surface" herein may be an entire region of the negative electrode current collector, or may be a partial region of the negative electrode current collector. This is not particularly limited in this application, provided that the objectives of this application can be achieved.

The negative electrode current collector in this application is not particularly limited, provided that the objectives of this application can be achieved. For example, the negative electrode current collector may include but is not limited to a copper foil, a copper alloy foil, a nickel foil, a stainless steel foil, a titanium foil, nickel foam, copper foam, or a composite current collector. In this application, thickness of the negative electrode current collector is not particularly limited, provided that the objectives of this application can be achieved. For example, the thickness of the negative electrode current collector is 4 µm to 12 µm.

In this application, the negative electrode active substance layer includes a negative electrode active material, and the negative electrode active material is not particularly limited, provided that the objectives of this application can be achieved. For example, the negative electrode active material may include but is not limited to at least one of natural graphite, artificial graphite, mesocarbon microbeads, hard carbon, soft carbon, silicon, a silicon-carbon composite, Li-Sn alloy, Li-Sn-O alloy, Sn, SnO, SnO₂, spinel-structure lithiated TiO₂-Li₄Ti₅O₁₂, or Li-Al alloy.

In this application, the negative electrode active substance layer may further include a conductive agent. The conductive agent is not particularly limited in this application, provided that the objectives of this application can be achieved. For example, the conductive agent may include but is not limited to at least of the foregoing conductive agents.

In this application, the negative electrode active substance layer may further include a binder. The binder is not particularly limited in this application, provided that the objectives of this application can be achieved. For example, the binder may include but is not limited to at least of the foregoing binders.

Optionally, the negative electrode may further include a conductive layer, and the conductive layer is sandwiched between the negative electrode current collector and the negative electrode active substance layer. Composition of the conductive layer is not particularly limited in this application, and the conductive layer may be a conductive layer commonly used in the art. The conductive layer may include but is not limited to the foregoing conductive agent and the foregoing binder.

The electrochemical apparatus in this application further includes a separator. The separator is not particularly limited in this application, provided that the objectives of this application can be achieved. For example, the separator may include but is not limited to at least one of polyethylene (PE), polypropylene (PP), and polytetrafluoroethylene-based polyolefin (PO) separator, polyester film (for example, polyethylene terephthalate (PET) film), cellulose film, polyimide film (PI), polyamide film (PA), spandex film, aramid film, woven film, non-woven fabric, microporous film, composite film, separator paper, laminated film, or spinning film. The separator in this application may have a porous structure. A pore size is not particularly limited, provided that the objectives of this application can be achieved. For example, the pore size may be 0.01 µm to 1 µm. Thickness of the separator is not particularly limited in this application, provided that the objectives of this application can be achieved. For example, the thickness of the separator may be 5 µm to 500 µm.

For example, the separator may include a separator substrate layer and a surface treatment layer. The separator substrate layer may be a non-woven fabric, film, or composite film of a porous structure. The separator substrate layer may include but is not limited to at least one of polyethylene, polypropylene, polyethylene terephthalate, or polyimide. Optionally, a polypropylene porous film, a polyethylene porous film, a polypropylene nonwoven fabric, a polyethylene nonwoven fabric or a polypropylene-polyethylene-polypropylene porous composite film may be used. Optionally, the surface treatment layer is provided on at least one surface of the separator substrate layer, and the surface treatment layer may be a polymer layer or an inorganic substance layer, or a layer formed by mixing a polymer and an inorganic substance.

The polymer layer includes a polymer, and a material of the polymer may include but is not limited to at least one of polypropylene, polyamide, polyacrylonitrile, acrylate polymer, polyacrylic acid, polyacrylate salt, polyvinylpyrrolidone, polyvinyl ether, polyvinylidene fluoride, or polyvinylidene fluoride-hexafluoropropylene. The inorganic substance layer may include but is not limited to an inorganic particle and a binder. The inorganic particle is not particularly limited in this application. For example, the inorganic particle may include but is not limited to at least one of aluminum oxide, silicon oxide, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder in the inorganic substance layer is not particularly limited in this application. For example, the inorganic substance layer binder may include but is not limited to at least one of polyvinylidene fluoride, polyvinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene.

The electrochemical apparatus in this application is not particularly limited, and may include any apparatus in which electrochemical reactions take place. In some embodiments, the electrochemical apparatus may include but is not limited to a lithium metal secondary battery, a lithium-ion secondary battery (lithium-ion battery), a lithium polymer secondary battery, or a lithium-ion polymer secondary battery.

A process for preparing the electrochemical apparatus is well known to a person skilled in the art, and is not particularly limited in this application. For example, the process may include but is not limited to the following steps: a positive electrode, a separator, and a negative electrode are stacked in sequence and go through operations such as winding and folding as needed to obtain an electrode assembly with a wound structure, the electrode assembly is put into a packaging bag, and the packaging bag is injected with an electrolyte and sealed to obtain an electrochemical apparatus; or a positive electrode, a separator, and a negative electrode are stacked in sequence, four corners of an entire laminated structure are fixed with tapes to obtain an electrode assembly with a laminated structure, the electrode assembly is put into a packaging bag, and the packaging bag is injected with an electrolyte and sealed to obtain an electrochemical apparatus. In addition, if necessary, an overcurrent prevention element, a guide plate, and the like may be placed in the packaging bag to prevent pressure increase, overcharge, and overdishcarge in the electrochemical apparatus.

A second aspect of this application provides an electronic apparatus, including the electrochemical apparatus according to the first aspect of this application.

The electronic apparatus of this application is not particularly limited, and the electronic apparatus may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

In the following, examples and comparative examples are given to describe the implementation of this application in more detail. Various tests and evaluations are performed in the following methods. In addition, unless otherwise specified, "part" and "%" are based on weight.

### Test method and device

### Lithium precipitation test

(1) Lithium precipitation test of lithium-ion battery at 10°C: At 10°C, a lithium-ion battery was left standing for 5 minutes, charged at a constant current of 1.5C to 4.25 V, then charged at a constant current of 1.2C to 4.48 V, and then charged at a constant voltage of 4.48 V to 0.02C and left standing for 5 minutes; and discharged at a constant current of 1C to 3.4 V, and then discharged at a constant current of 0.2C to 3.0 V. The above steps were repeated for nine times, and then the lithium-ion battery was left standing for 5 minutes, then charged at a constant current of 1C to 4.48 V, then charged at a constant voltage of 4.48 V to 0.02C, and finally left standing for 5 minutes, and disassembled to observe the degrees of lithium precipitation at the negative electrode tab groove and the end portion of the negative electrode.
(2) Lithium precipitation test of lithium-ion battery at 25°C: At 25°C, a lithium-ion battery was left standing for 5 minutes, charged at a constant current of 1.5C to 4.25 V, then charged at a constant current of 1.2C to 4.48 V, and then charged at a constant voltage of 4.48 V to 0.02C, and left standing for 5 minutes; and next, discharged at a constant current of 1C to 3.4 V, and then discharged at a constant current of 0.2C to 3.0 V. The above steps were repeated for nine times, and then the lithium-ion battery was left standing for 5 minutes, then charged at a constant current of 1C to 4.48 V, then charged at a constant voltage of 4.48 V to 0.02C, and finally left standing for 5 minutes, and disassembled to observe the degrees of lithium precipitation at the negative electrode tab groove and the end portion of the negative electrode.
(3) Lithium precipitation test of lithium-ion battery at 45°C: At 45°C, a lithium-ion battery was left standing for 5 minutes, charged at a constant current of 1.5C to 4.25 V, then charged at a constant current of 1.2C to 4.48 V, and then charged at a constant voltage of 4.48 V to 0.02C, and left standing for 5 minutes; and next, discharged at a constant current of 1C to 3.4 V, and then discharged at a constant current of 0.2C to 3.0 V. The above steps were repeated for nine times, and then the lithium-ion battery was left standing for 5 minutes, then charged at a constant current of 1C to 4.48 V, then charged at a constant voltage of 4.48 V to 0.02C, and finally left standing for 5 minutes, and disassembled to observe the degrees of lithium precipitation at the negative electrode tab groove and the end portion of the negative electrode.

No lithium precipitation is found, or a lithium precipitation area less than 10% is considered no lithium precipitation herein, and a lithium precipitation area greater than or equal to 10% is considered lithium precipitation.

### Adhesion strength test

Perforated adhesive tapes in the examples and adhesive tapes in comparative examples were affixed to aluminum foils, respectively and cut into 20 mm × 60 mm strip samples. Under the conditions of temperature of 85°C and pressure of 1 MPa, the sample was hot pressed for 40 minutes, then soaked in 85°C electrolyte for 4 hours, and attached to a steel plate using double-sided adhesive tape (Nitto 5000NS) (adhesion length not less than 40 mm). The steel plate was fixed at the corresponding position of a Gotech tensile machine. The other end of the sample not adhered to the steel plate was pulled up, and the sample was clamped into a collet. A spatial included angle between the lifted portion of the sample and the steel plate was 180°. The collet pulled the sample at a speed of 50 mm/min, and a final average tensile force tested in a stable range was denoted as the adhesion strength of the sample soaked in the electrolyte.

The organic solvents of the electrolyte were ethylidene carbonate (EC), propylidene carbonate (PC), diethylidene carbonate (DEC), ethyl propionate (EP), with a mass ratio of EC:PC:DEC:EP=3:1:3:3, and the solute was lithium hexafluorophosphate (LiPF₆) with a concentration of LiPF₆ of 1 mol/L.

### Adhesive overflow test

An initial width of the adhesive tape was measured, and then the maximum width of the adhesive tape was measured as the adhesive overflow width after the adhesive tape was hot-pressed at a temperature of 85°C and a pressure of 1 MPa for 1 hour. Ten samples were tested for the perforated adhesive tape in each example and the adhesive tape in each comparative example, and the maximum single-sided adhesive overflow width of the adhesive tape was half of the average of differences between the adhesive overflow widths and initial widths of the ten samples.

### Swelling thickness test

An adhesive tape was cut into strips of 20 mm × 60 mm, and an initial thickness of the adhesive tape was measured and denoted as B. Then the adhesive tape strip was affixed to an aluminum foil and soaked in an electrolyte for 24 hours at a soaking temperature of 85°C. The soaked adhesive tape strip was taken out and wiped dry, and the thickness of the edge of the adhesive tape was measured and denoted as A using a micrometer within 5 minutes. 10 random locations were selected for measurement, and the average value obtained was the swelling thickness of the adhesive tape A-B. Ten samples were tested for the perforated adhesive tape in each example and the adhesive tape in each comparative example, and the swelling thickness of the adhesive tape was the average of A-B values of the ten samples. The electrolyte was the same as the electrolyte used in the foregoing adhesion strength test.

### Example 1-1

### <Preparation of positive electrode>

Positive electrode active material lithium cobaltate (LiCoO₂), conductive agent conductive carbon black (Super P), and binder polyvinylidene fluoride were mixed at a mass ratio of 97:1.4:1.6, added with N-methylpyrrolidone (NMP), and well stirred under the action of a vacuum mixer to obtain a positive electrode slurry, where the solid content of the positive electrode slurry was 75 wt%. The positive electrode slurry was uniformly applied onto a surface of the positive electrode current collector aluminum foil with a thickness of 9 µm, and the aluminum foil was dried at 85°C to obtain a positive electrode having a positive electrode active substance layer coated on a single surface, with a coating layer of 110 µm in thickness. The foregoing steps were repeated on another surface of the aluminum foil to obtain a positive electrode coated with the positive electrode active material on two surfaces. After cold pressing, cutting, and slitting, drying was performed in vacuum at 85°C for 8 hours to obtain a positive electrode with a size of 74 mm × 851 mm. The positive electrode includes on positive electrode tab. In this application, as shown in FIG. 2, green adhesive was applied at the following positions: (1) the connection region between the positive electrode tab and the positive electrode; and (2) surfaces of two negative electrodes adjacent to the positive electrode at which the positive electrode tab is located, close to the positive electrode, with affixing positions opposite the position of the foregoing connection region. The green adhesive was purchased from Dongguan Aozon New Materials Technology Co., Ltd.

### <Preparation of negative electrode>

Negative electrode active material artificial graphite, conductive agent Super P, thickener sodium carboxymethyl cellulose (CMC-Na), and binder styrene-butadiene rubber (SBR) were mixed at a mass ratio of 96.4:1.5:0.5:1.6, added with deionized water, and well stirred under the action of a vacuum mixer to obtain a negative electrode slurry, where the solid content of the negative electrode slurry was 70 wt%. The negative electrode slurry was uniformly applied onto a surface of the negative electrode current collector copper foil with a thickness of 6 µm, and the copper foil was dried at 110°C to obtain a negative electrode having a negative electrode active substance layer coated on a single surface, with a coating layer of 130 µm in thickness. The foregoing steps were repeated on another surface of the aluminum foil to obtain a negative electrode coated with the negative electrode active material on two surfaces. After cold pressing, cutting, and slitting, drying was performed in vacuum at 120°C for 12 hours to obtain a negative electrode with a size of 76 mm × 867 mm. The negative electrode included a negative electrode tab, and a negative electrode tab groove was provided by laser cleaning.

### <Preparation of electrolyte>

In a glove box under argon atmosphere with a water content less than 10 ppm, ethylene carbonate (EC), propylene carbonate (PC), and ethyl propionate (EP) were mixed to uniformity at a mass ratio of 1:1:1 to form a base solvent, finally added with LiPF₆ to dissolve, and stirred well to form an electrolyte. Based on a total mass of the electrolyte, a mass percentage of LiPF₆ was 12.5%, and the remainder was the base solvent.

### <Preparation of separator>

A polyethylene porous polymer film was used as the separator.

### <Preparation of adhesive tape>

The adhesive tape includes an adhesive layer disposed on a surface of a substrate layer, where the thickness of the adhesive tape is 24 µm, the thickness of the adhesive layer is 12 µm, and the thickness of the substrate layer is 12 µm.

Polypropylene, elastomer polyurethane, filler titanium dioxide, and antioxidant diphenylamine were mixed well at a mass ratio of 60:25:7.5:7.5, then coated on the substrate layer and dried at 120°C to obtain the adhesive tape. Further, the laser perforation method was used to perforate on two sides along the edges in the length direction of the perforated adhesive tape with a hole spacing of b = 0.6 mm and a hole diameter of c = 0.8 mm. The molecular weight of polypropylene was 115,000, the width of the first perforated region was 8 mm, the width of the second perforated region was 8 mm, the width of the non-perforated region was 9 mm, and the shape of the holes was a circle.

The substrate layer was a polyethylene terephthalate film.

### <Preparation of lithium-ion battery>

The adhesive tape of 25 mm × 45 mm was affixed to the surface of the negative electrode tab groove and the first and second surfaces of the positive electrode, and wrapped around the end portion of the positive electrode, with affixing positions opposite the position of the negative electrode tab groove. The positive electrode, the separator, and the negative electrode were stacked in order, so that the separator was placed between the positive electrode and the negative electrode for separation, and winding was performed to obtain an electrode assembly. The electrode assembly was placed into an aluminum-plastic film packaging bag and dried, and then the electrolyte was injected, followed by processes such as vacuum packaging, standing, formation, capacity grading, degassing, and trimming to obtain a lithium-ion battery. The formation condition was as follows: charged at a constant current of 0.02C to 3.3 V, then charged at a constant current of 0.1C to 3.6 V, and finally charged at a constant current of 0.2C to 4.45 V.

### Example 1-2 to Example 1-4

These examples were the same as Example 1-1 except that the affixing position of the adhesive tape was adjusted according to Table 1.

### Example 2-1 to Example 2-8

These examples were the same as Example 1-3 except that the width w₁ of the perforated adhesive tape, the width w₂ of the first perforated region, the width w₃ of the second perforated region, and the width w₄ of the non-perforated region in the perforated adhesive tape, the hole spacing b, the hole diameter c, and the hole shape were adjusted according to Table 2.

### Example 3-1 to Example 3-7

These examples were the same as Example 1-3 except that the composition and weight-average molecular weight of adhesive layer component 1 were adjusted according to Table 4.

### Example 4-1 to Example 4-7

These examples were the same as Example 1-3 except that the mass percentage of the adhesive layer component 1, and the compositions and their mass percentages of the adhesive layer component 2 were adjusted according to Table 5.

### Example 5-1 to Example 5-6

These examples were the same as Example 1-3 except that the thicknesses of the adhesive layer and substrate layer and the material of the substrate layer were adjusted according to Table 6.

### Comparative example 1

Same as Example 1-1 except that a green adhesive was used instead of the perforated adhesive tape.

The preparation parameters and performance tests of examples and comparative examples are shown in Table 1 to Table 6.

**Table 1**

| | Affixing position of perforated adhesive tape | Whether perforated adhesive tape is wrapped around end portion of positive electrode | Adhesion strength of adhesive tape soaked (N/mm) | Swelling thickness A-B of adhesive tape (µm) | Maximum single-sided adhesive overflow width (mm) | Degree of lithium precipitation at negative electrode tab groove | | | Degree of lithium precipitation at end portion of negative electrode | | |
|---|---|---|---|---|---|---|---|---|---|---|---|
| | | | | | | 10°C | 25°C | 45°C | 10°C | 25°C | 45°C |
| Example 1-1 | Negative electrode tab groove and first surface and second surface of positive electrode | Yes | 0.37 | 1.1 | 0.24 | No lithium precipita tion | No lithium precipitati on | No lithium precipita tion | No lithium precipita tion | No lithium precipita tion | No lithium precipit ation |
| Example 1-2 | Negative electrode tab groove and first surface of positive electrode | / | 0.32 | 1.2 | 0.27 | No lithium precipita tion | No lithium precipitati on | No lithium precipita tion | Lithium precipita tion | No lithium precipita tion | No lithium precipit ation |
| Example 1-3 | Negative electrode tab groove | / | 0.34 | 1.0 | 0.26 | No lithium precipita tion | No lithium precipitati on | No lithium precipita tion | Lithium precipita tion | Lithium precipita tion | Lithium precipit ation |
| Example 1-4 | Negative electrode tab groove and first surface and second surface of positive electrode | No | 0.35 | 1.1 | 0.23 | No lithium precipita tion | No lithium precipitati on | No lithium precipita tion | Lithium precipita tion | No lithium precipita tion | No lithium precipit ation |
| Comparative example 1 | / | / | 0.01 | 3.2 | 1.40 | Lithium precipita tion | Lithium precipitati on | Lithium precipita tion | Lithium precipita tion | Lithium precipita tion | Lithium precipit ation |

| | | | | | | | | | | | |
|---|---|---|---|---|---|---|---|---|---|---|---|
| Note: In Table 1, "/" means that a corresponding preparation parameter does not exist. | | | | | | | | | | | |

It can be seen from Examples 1-1 to 1-4 and Comparative example 1 that the lithium-ion batteries in some embodiments of this application includes the perforated adhesive tape so that the problem of lithium precipitation in the lithium-ion batteries can be effectively alleviated. The affixing position of the perforated adhesive tape generally affects the performance of the electrochemical apparatus. It can be seen from Examples 1-1 to 1-4 that with the perforated adhesive tape affixed in a position within the scope of this application, the problem of lithium precipitation in the lithium-ion batteries can be effectively alleviated.

**Table 2**

| | w₁ (mm) | W2 (mm) | W3 (mm) | W4 (mm) | W3:W4 | b (mm) | c (mm) | Hole shape | Ratio of sum of areas of holes in first perforated region to area of first perforated region (%) | Ratio of sum of areas of holes in second perforated region to area of second perforated region (%) |
|---|---|---|---|---|---|---|---|---|---|---|
| Example 1-3 | 25 | 8 | 8 | 9 | 0.9:1 | 0.5 | 0.8 | Circle | 29 | 29 |
| Example 2-1 | 12 | 3 | 3 | 6 | 0.5:1 | 0.04 | 0.2 | Circle | 52 | 52 |
| Example 2-2 | 6 | 2 | 2 | 2 | 1:1 | 0.1 | 0.3 | Circle | 44 | 44 |
| Example 2-3 | 30 | 10 | 10 | 10 | 1:1 | 0.1 | 1 | Circle | 64 | 64 |
| Example 2-4 | 25 | 8 | 8 | 10 | 0.8:1 | 0.1 | 1.9 | Circle | 71 | 71 |
| Example 2-5 | 25 | 8 | 8 | 9 | 0.9:1 | 0.1 | 2 | Circle | 56 | 56 |
| Example 2-6 | 25 | 8 | 8 | 9 | 0.9:1 | 0.1 | 1 | Regular triangle | 26 | 26 |
| Example 2-7 | 25 | 8 | 8 | 9 | 0.9:1 | 0 | 2.83 | Regular octagon | 83 | 83 |
| Example 2-8 | 25 | 8 | 8 | 9 | 0.9:1 | 1 | 0.4 | Circle | 7 | 7 |

| | | | | | | | | | | |
|---|---|---|---|---|---|---|---|---|---|---|
| Note: In Table 2, "/" means that a corresponding preparation parameter does not exist. | | | | | | | | | | |

**Table 3**

| | Adhesion strength of adhesive tape soaked (N/mm) | Swelling thickness A-B of adhesive tape (µm) | Maximum single-sided adhesive overflow width (mm) | Degree of lithium precipitation at negative electrode tab groove | | |
|---|---|---|---|---|---|---|
| | | | | 10°C | 25°C | 45°C |
| Example 1-3 | 0.34 | 1.0 | 0.26 | No lithium precipitation | No lithium precipitation | No lithium precipitation |
| Example 2-1 | 0.39 | 1.3 | 0.29 | No lithium precipitation | No lithium precipitation | No lithium precipitation |
| Example 2-2 | 0.36 | 1.4 | 0.31 | No lithium precipitation | No lithium precipitation | No lithium precipitation |
| Example 2-3 | 0.34 | 1.2 | 0.26 | No lithium precipitation | No lithium precipitation | No lithium precipitation |
| Example 2-4 | 0.38 | 1.3 | 0.22 | No lithium precipitation | No lithium precipitation | No lithium precipitation |
| Example 2-5 | 0.35 | 1.1 | 0.27 | No lithium precipitation | No lithium precipitation | No lithium precipitation |
| Example 2-6 | 0.40 | 1.2 | 0.29 | No lithium precipitation | No lithium precipitation | No lithium precipitation |
| Example 2-7 | 0.16 | 1.2 | 0.36 | No lithium precipitation | No lithium precipitation | No lithium precipitation |
| Example 2-8 | 0.41 | 1.2 | 0.25 | Lithium precipitation | Lithium precipitation | Lithium precipitation |

The width w₁ of the perforated adhesive tape, the width w₂ of the first perforated region, the width w₃ of the second perforated region, the width w₄ of the non-perforated region, the ratio w₃:w₄ of the width of the second perforated region to the width of the non-punched region, the hole spacing b, the hole diameter c, and the hole shape generally also affect the performance of the electrochemical apparatus. It can be seen from Example 1-3 and Examples 2-1 to 2-8 that with the foregoing parameters being controlled within the scope of this application, the perforated adhesive tape obtained has a high adhesion strength, a low swelling thickness, and a low maximum single-sided adhesive overflow width, and that with the perforated adhesive tape affixed in a position within the scope of this application, the problem of lithium precipitation in the electrochemical apparatus lithium-ion batteries can be alleviated. Furthermore, it can be seen from Examples 1-3, 2-7, and 2-8 that, when a ratio of the sum of areas of the holes in the first perforated region to the area of the first perforated region or a ratio of the sum of areas of the holes in the second perforated region to the area of the second perforated region is too large, the perforated adhesive tape has a significantly decreased adhesion strength, but the problem of lithium precipitation in the electrochemical apparatus can be alleviated since lithium ions can be better transported. However, when the ratio of the sum of the areas of the holes in the first perforated region to the area of the first perforated region or the ratio of the sum of the areas of the holes in the second perforated region to the area of the second perforated region is too small, the transport of lithium ions is affected, and the problem of lithium precipitation in the electrochemical apparatus cannot be alleviated. With the ratio of the sum of the areas of the holes in the first perforated region to the area of the first perforated region and the ratio of the sum of the areas of the holes in the second perforated region to the area of the second perforated region being controlled within the scope of this application, the problem of lithium precipitation in the electrochemical apparatus can be alleviated.

**Table 4**

| | Adhesive layer component 1 | Mass percentage of adhesive layer component 1 (%) | Weight-average molecular weight of adhesive layer component 1 | Adhesion strength of adhesive tape soaked (N/mm) | Swelling thickness A-B of adhesive tape (µm) | Maximum single-sided adhesive overflow width (mm) | Degree of lithium precipitation at negative electrode tab groove | | |
|---|---|---|---|---|---|---|---|---|---|
| | | | | | | | 10°C | 25°C | 45°C |
| Example 1-3 | Polypropylene | 60 | 115,000 | 0.34 | 1.0 | 0.26 | No lithium precipitation | No lithium precipitation | No lithium precipitation |
| Example 3-1 | Polyethylene | 60 | 115,000 | 0.38 | 1.3 | 0.26 | No lithium precipitation | No lithium precipitation | No lithium precipitation |
| Example 3-2 | Polypropylene | 60 | 20,000 | 0.12 | 2.4 | 0.59 | Lithium precipitation | No lithium precipitation | No lithium precipitation |
| Example 3-3 | Polypropylene | 60 | 30,000 | 0.24 | 1.7 | 0.53 | No lithium precipitation | No lithium precipitation | No lithium precipitation |
| Example 3-4 | Polypropylene | 60 | 200,000 | 0.38 | 1.3 | 0.34 | No lithium precipitation | No lithium precipitation | No lithium precipitation |
| Example 3-5 | Polyethylene + polypropylene | 30 + 30 | 115,000 | 0.35 | 1.3 | 0.30 | No lithium precipitation | No lithium precipitation | No lithium precipitation |
| Example 3-6 | Polyethylene + maleic anhydride modified polyethylene | 30 + 30 | 115,000 | 0.35 | 1.2 | 0.22 | No lithium precipitation | No lithium precipitation | No lithium precipitation |
| Example 3-7 | Polyethylene + polypropylene + maleic anhydride modified polyethylene + maleic anhydride modified polypropylene | 15+15+15+15 | 115,000 | 0.38 | 1.1 | 0.31 | No lithium precipitation | No lithium precipitation | No lithium precipitation |

The type and weight-average molecular weight of polyolefin and/or modified polyolefin in the adhesive layer of the perforated adhesive tape affect the performance of the perforated adhesive tape and also affect the performance of the electrochemical apparatus. It can be seen from Example 1-3 and Examples 3-1 to 3-7 that the perforated adhesive tape obtained in preparation of perforated adhesive tape using an adhesive layer component made within the scope of this application has a high adhesion strength, a low swelling thickness, and a low maximum single-sided adhesive overflow width, and that with the perforated adhesive tape affixed in a position within the scope of this application, the problem of lithium precipitation in the electrochemical apparatus can be alleviated, also facilitating enhancement of the safety performance of the electrochemical apparatus. Furthermore, it can be seen from Example 1-3 and Examples 3-1 to 3-4 that the perforated adhesive tape has a good adhesion strength and a low swelling thickness when the molecular weight of the polyolefin is within the range of this application, so that the problem of lithium precipitation in the electrochemical apparatus can be alleviated.

**Table 5**

| | Adhesive layer component 1 | Mass percentage of adhesive layer component 1 (%) | Adhesive layer component 2 | Mass percentage of adhesive layer component 2 (%) | Adhesion strength of adhesive tape soaked (N/mm) | Swelling thickness A-B of adhesive tape (µm) | Maximum single-sided adhesive overflow width (mm) | Degree of lithium precipitation at negative electrode tab groove | | |
|---|---|---|---|---|---|---|---|---|---|---|
| | | | | | | | | 10°C | 25°C | 45°C |
| Example 1-3 | Polypropylene | 60 | Styrene-ethylene-butylene-styrene block copolymer + titanium dioxide + diphenylamine | 25+7.5+7.5 | 0.34 | 1.0 | 0.26 | No lithium precipitation | No lithium precipitation | No lithium precipitation |
| Example 4-1 | Polypropylene | 40 | Styrene-ethylene-butylene-styrene block copolymer + titanium dioxide + diphenylamine | 45+7.5+7.5 | 0.11 | 2.3 | 0.55 | Lithium precipitation | No lithium precipitation | No lithium precipitation |
| Example 4-2 | Polypropylene | 45 | Styrene-ethylene-butylene-styrene block copolymer + titanium dioxide + diphenylamine | 40+7.5+7.5 | 0.23 | 1.8 | 0.37 | Lithium precipitation | No lithium precipitation | No lithium precipitation |
| Example 4-3 | Polypropylene | 85 | Styrene-ethylene-butylene-styrene block copolymer + titanium | 10+2.5+2.5 | 0.52 | 1.1 | 0.29 | No lithium precipitation | No lithium precipitation | No lithium precipitation |
| | | | dioxide + diphenylamine | | | | | | | |
| Example 4-4 | Polypropylene | 60 | Polyurethane + talcum powder + diphenylamine | 25+7.5+7.5 | 0.35 | 1.2 | 0.24 | No lithium precipitation | No lithium precipitation | No lithium precipitation |
| Example 4-5 | Polypropylene | 60 | Polyisobutylene + white carbon black + trimethyl phosphite | 25+7.5+7.5 | 0.38 | 1.2 | 0.16 | No lithium precipitation | No lithium precipitation | No lithium precipitation |
| Example 4-6 | Polypropylene | 60 | Polybutadiene + calcium carbonate + triethyl phosphite | 25+7.5+7.5 | 0.31 | 1.3 | 0.19 | No lithium precipitation | No lithium precipitation | No lithium precipitation |
| Example 4-7 | Polypropylene | 60 | Polyamide + titanium dioxide + dioctadecyl thiodipropionate | 25+7.5+7.5 | 0.32 | 1.1 | 0.21 | No lithium precipitation | No lithium precipitation | No lithium precipitation |

The percentage of polyolefin and/or modified polyolefin and the types and percentages of the elastomer, filler, and antioxidant in the adhesive layer of the perforated adhesive tape also affect the performance of the perforated adhesive tape and the performance of the electrochemical apparatus. It can be seen from Example 1-3 and Examples 4-1 to 4-7 that the perforated adhesive tape obtained in preparation of perforated adhesive tape using an adhesive layer component made within the scope of this application has a high adhesion strength, a low swelling thickness, and a low maximum single-sided adhesive overflow width, and that with the perforated adhesive tape affixed in a position within the scope of this application, the safety performance of the electrochemical apparatus can be enhanced, and the problem of lithium precipitation in the electrochemical apparatus can be alleviated.

**Table 6**

| | Thickness of adhesive layer (µm) | Material of substrate layer | Thickness of substrate layer (µm) | Adhesion strength of adhesive tape soaked (N/mm) | Swelling thickness A-B of adhesive tape (µm) | Maximum adhesive overflow width (mm) | Degree of lithium precipitation at negative electrode tab groove | | |
|---|---|---|---|---|---|---|---|---|---|
| | | | | | | | 10°C | 25°C | 45°C |
| Example 1-3 | 12 | Polyethylene terephthalate | 12 | 0.34 | 1.0 | 0.26 | No lithium precipitation | No lithium precipitation | No lithium precipitation |
| Example 5-1 | 4 | Polyethylene terephthalate | 12 | 0.18 | 1.0 | 0.28 | No lithium precipitation | No lithium precipitation | No lithium precipitation |
| Example 5-2 | 20 | Polyethylene terephthalate | 12 | 0.25 | 1.2 | 0.19 | No lithium precipitation | No lithium precipitation | No lithium precipitation |
| Example 5-3 | 12 | Polyethylene terephthalate | 4 | 0.34 | 1.0 | 0.31 | No lithium precipitation | No lithium precipitation | No lithium precipitation |
| Example 5-4 | 12 | Polyethylene terephthalate | 30 | 0.37 | 1.1 | 0.22 | No lithium precipitation | No lithium precipitation | No lithium precipitation |
| Example 5-5 | 12 | Polyimide | 12 | 0.36 | 1.6 | 0.35 | No lithium precipitation | No lithium precipitation | No lithium precipitation |
| Example 5-6 | 12 | Polypropylene | 12 | 0.39 | 1.4 | 0.29 | No lithium precipitation | No lithium precipitation | No lithium precipitation |

The thickness of the adhesive layer and the type and thickness of the substrate layer in the perforated adhesive tape also affect the performance of the perforated adhesive tape and the performance of the electrochemical apparatus. It can be seen from Example 1-3 and Examples 5-1 to 5-6 that the perforated adhesive tape obtained in preparation of perforated adhesive tape using an adhesive layer and a substrate layer within the scope of this application has a high adhesion strength, a low swelling thickness, and a low maximum single-sided adhesive overflow width, and that with the perforated adhesive tape affixed in a position within the scope of this application, the problem of lithium precipitation in the electrochemical apparatus can be alleviated.

It should be noted that relational terms such as "first" and "second" are only used to distinguish one entity or operation from another entity or operation, and do not necessarily require or imply that there is any such actual relationship or order between these entities or operations. In addition, terms "comprise", "include", or any of their variants are intended to cover a non-exclusive inclusion, so that a process, a method, an article, or a device that includes a series of elements not only includes those elements but also includes other elements that are not expressly listed, or further includes elements inherent to such process, method, article, or device.

The embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, comprising an electrode assembly, wherein the electrode assembly comprises a positive electrode, a negative electrode, and a separator, with the separator being disposed between adjacent positive and negative electrodes; and
the negative electrode comprises a negative electrode current collector and a negative electrode active substance layer disposed on at least one surface of the negative electrode current collector, the negative electrode is provided with a negative electrode tab groove exposing the negative electrode current collector, and the negative electrode tab is fixed in the negative electrode tab groove and electrically connected to the negative electrode current collector;
wherein a surface of the negative electrode tab is provided with a perforated adhesive tape, the perforated adhesive tape is provided with holes along its edges in length direction, and the holes of the perforated adhesive tape are located in the perforated adhesive tape covering portions of the negative electrode active substance layer on two sides of the negative electrode tab groove.

2. The electrochemical apparatus according to claim 1, wherein the positive electrode comprises a first surface and a second surface opposite each other, and the first surface is close to the negative electrode; and
the perforated adhesive tape is further affixed to a position on the first surface corresponding to the negative electrode tab groove.

3. The electrochemical apparatus according to claim 2, wherein the perforated adhesive tape is further affixed to a position on the second surface corresponding to the negative electrode tab groove.

4. The electrochemical apparatus according to claim 2, wherein the perforated adhesive tape goes around the edge of an end portion of the positive electrode and is further affixed to a position on the second surface corresponding to the negative electrode tab groove.

5. The electrochemical apparatus according to claim 1, wherein a first perforated region, a second perforated region, and a non-perforated region are provided in a width direction of the perforated adhesive tape, the non-perforated region is located between the first perforated region and the second perforated region, and width w₁ of the perforated adhesive tape is 6 mm to 30 mm; the width of the first perforated region is denoted as w₂, the width of the second perforated region is denoted as w₃, and w₂ and w₃ are each independently selected from 1 mm to 10 mm; and width w₄ of the non-perforated region is 2 mm to 10 mm, and a width ratio of the width of the first perforated region or the second perforated region to the width of the non-perforated region is 0.5:1 to 1:1.

6. The electrochemical apparatus according to claim 5, wherein the holes of the perforated adhesive tape satisfy at least one of the following characteristics:
(1) a spacing b between the holes is 0.1 mm to 2 mm, and a minimum diameter c of a circumscribed circle of the contour of the hole is 0.1 mm to 2 mm;
(2) a sum of areas of the holes in the first perforated region accounts for 20% to 80% of the area of the first perforated region, and a sum of areas of the holes in the second perforated region accounts for 20% to 80% of the area of the second perforated region; or
(3) the shape of the holes is at least one of a circle, an ellipse, or a polygon.

7. The electrochemical apparatus according to claim 1, wherein the perforated adhesive tape comprises an adhesive layer and a substrate layer, the adhesive layer comprising polyolefin and/or modified polyolefin, elastomer, filler, and antioxidant, wherein based on total mass of the adhesive layer, a mass percentage of the polyolefin and/or modified polyolefin is 45% to 85%, a mass percentage of the elastomer is 10% to 35%, a mass percentage of the filler is 2% to 10%, and a mass percentage of the antioxidant is 2% to 10%.

8. The electrochemical apparatus according to claim 7, wherein the adhesive layer satisfies at least one of the following characteristics:
(1) the polyolefin comprises polyethylene and/or polypropylene, the modified polyolefin comprises maleic anhydride modified polyethylene and/or maleic anhydride modified polypropylene, and weight-average molecular weights of the polyolefin and the modified polyolefin are each independently selected from 30,000 to 200,000;
(2) the elastomer comprises at least one of styrene-ethylene-butylene-styrene block copolymer, polyurethane, polyamide, polybutadiene, or polyisobutylene;
(3) the filler comprises at least one of titanium dioxide, talcum powder, white carbon black, or calcium carbonate; or
(4) the antioxidant comprises at least one of diphenylamine, trimethyl phosphite, triethyl phosphite, or dioctadecyl thiodipropionate.

9. The electrochemical apparatus according to claim 7, wherein the substrate layer comprises at least one of polyethylene terephthalate, polyimide, or polypropylene.

10. The electrochemical apparatus according to claim 7, wherein the thickness of the adhesive layer is 4 µm to 20 µm, and the thickness of the substrate layer is 4 µm to 30 µm.

11. The electrochemical apparatus according to claim 1, wherein an adhesion strength of the perforated adhesive tape soaked in an electrolyte at 85°C for 4 hours is 0.2 N/mm to 0.5 N/mm.

12. The electrochemical apparatus according to claim 1, wherein thickness A of the perforated adhesive tape soaked in the electrolyte at 85°C for 24 hours and thickness B of the perforated adhesive tape without soaking in the electrolyte satisfy: 0 µm < A-B ≤ 2 µm.

13. The electrochemical apparatus according to claim 1, wherein a maximum single-sided adhesive overflow width of the perforated adhesive tape is 0 mm to 1 mm.

14. An electronic apparatus, comprising the electrochemical apparatus according to any one of claims 1 to 13.
